# EUROPEAN PATENT APPLICATION

(11) **EP 1 707 539 A1**
(43) Date of publication of application: **04.10.2006**
(21) Application number: 06006058.9
(22) Date of filing: 24.03.2006
(51) Int. Cl.: C02F 1/42, C02F 1/32

(54) **Modular water treatment unit**

(30) Priority: 28.03.2005 US 665722 P; 22.03.2006 US 277163
(71) Applicant: Pentair Water Italy S.r.l., 20010 Pregnana M. SE MI (IT)
(72) Inventor: Averbeck, Dave, 53118 Dousman Wisconsin (US)
(74) Representative: Mannucci, Michele

(57) **Abstract**

A modular water treatment unit (10) for use with water softeners and media filtration systems to permit the connection of filtration, light irradiation and other components to the softener or filtration system (12) without the need to assemble a custom plumbing system to connect the components. By simply rotating the modular treatment unit 180 degrees, the unit can be used to treat either the water on the inlet or the outlet side of the water softener or media filtration unit. The modular water treatment unit includes a modular treatment head (20) that is removably connected to a treatment sump. The treatment sump houses filtration cartridges, UV irradiation or other components. The treatment head of the modular water treatment unit includes a bypass tube and a treatment tube that is parallel to the bypass tube. The bypass tube permits the passage of water without subjecting the water to filtration or irradiation. The treatment tube directs the flow of water through the sump of the modular water treatment unit, to either filter or irradiate the water. The parallel orientation of the pass through and treatment tubes allows for the use of quick connect clips and o-rings which eliminates the need to thread, solder, glue or weld the system components together. Treatment of the inlet or the outlet side of the water softener or media filtration unit can be accompanied by repositioning the bypass and treatment tubes through repositioning of the treatment head. This repositioning can be performed quickly without the need for costly and time consuming plumbing.

## Description

### BACKGROUND

This disclosure relates to a modular water treatment unit that is designed to be used in connection with water softeners or media filtration units to permit selectability between filtering untreated or treated water entering or exiting the water softener or media filtration unit. Existing water treatment units utilized by the water purification industry require custom plumbing configurations that must be either threaded, soldered, glued, or welded to connect the water treatment units to a treatment system. A level of plumbing complexity occurs when filtration, water softening and light irradiation subsystems are combined to create a water treatment solution, The existing water treatment designs increase installation and maintenance costs and reduce system reliability.

In view of the above, it should be appreciated that there is a need for a modular water treatment unit that is adapted to be quickly connected to water softeners or media filtration systems, eliminating unnecessary plumbing and time associated with typical installations as well as a reduction in cost and an increase in reliability over the life of the system. There is also need for a system that permits selectability between treatment components to treat either the incoming or outgoing supply tube. The present disclosure satisfies these and other needs and provides further related advantages.

### SUMMARY

The invention comprises a modular water treatment unit for use with water softeners and media filtration systems to permit the connection of filtration, light irradiation and other components to the softener or filtration system without the need for custom plumbing to connect the components. By simply rotating the modular treatment unit 180 degrees, the unit can be used to treat either the water on the inlet or the outlet side of the water softener, water lines, or a media filtration unit. The modular water treatment unit includes a modular treatment head that is removably connected to a treatment sump. The treatment sump houses filtration cartridges, UV irradiation or other components, The treatment head of the modular water treatment unit includes a bypass tube and a treatment tube that is parallel to the bypass tube. The bypass tube permits the passage of water without subjecting the water to filtration or irradiation. The treatment tube directs the flow of water through the sump of the modular water treatment unit, to either filter or irradiate the water. The parallel orientation of the pass through and treatment tubes allows for the use of quick connect clips and o-rings which eliminates the need to thread, solder, glue or weld the system components together. Treatment of the water lines from the inlet or the outlet side of the water softener or media filtration unit can be accomplished by repositioning the bypass and treatment tubes through rotation of the treatment head. The adjustment of the water treatment can be performed quickly without the need for costly and time consuming plumbing.

Other features and advantages of the invention will be set forth in part in the description which follows and the accompanying drawings, wherein the embodiments of the disclosure are described and shown, and in part will become apparent upon examination of the following detailed description taken in conjunction with the accompanying drawings.

### BRIEF DESCRIPTION OF THE DRAWINGS

The above mentioned and other features of this disclosure and the manner of obtaining them will become more apparent and the disclosure itself will be best understood by reference to the following description of embodiments of the disclosure taken in conjunction with the accompanying drawings in which:
FIG. 1 is a side elevational view of two modular water treatment units in series connected to a water softener and bypass valve;
FIG. 2 is a top elevational view of the modular water treatment unit;
FIG. 3 is a cross sectional view taken along the lines BB of Figure 2 and illustrates the treatment head and treatment sump of the modular water treatment unit;
FIG. 4 is a top elevational view of the treatment head of the irradiation modular treatment unit;
FIG. 5 is a cross sectional view taken along the lines AA of Figure 4, illustrating the treatment head and sump for the irradiation modular treatment system; and
FIG. 6 is a top view of a pair of modular water treatment units in series connected to a water softener and a bypass valve as shown in Figure 1.

### DETAILED DESCRIPTION

While the present invention will be described fully hereinafter with reference to the accompanying drawings, in which a particular embodiment is shown, it is to be understood at the outset that persons skilled in the art may modify the disclosure herein described while still achieving the desired result of this disclosure. Accordingly, the description that follows is to be understood as a broad, informative disclosure directed to persons skilled in the appropriate art and not as limitations on the present disclosure.

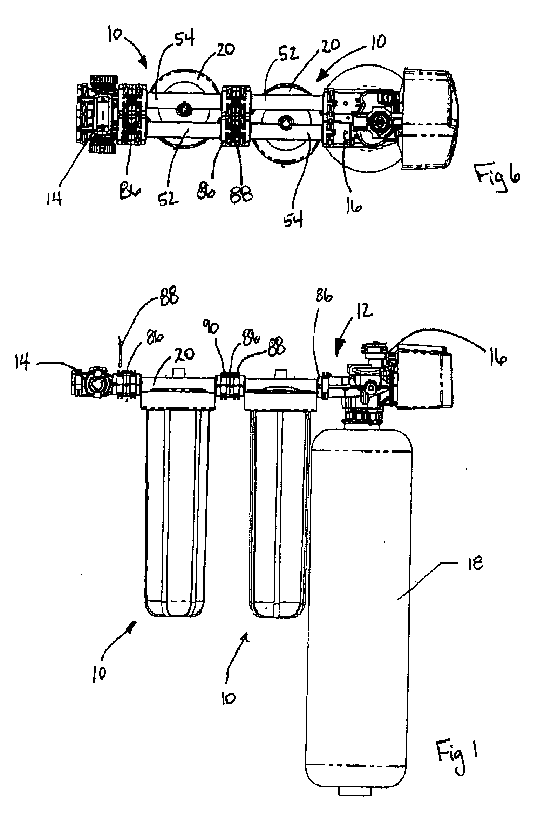

As illustrated in the drawings, a modular water treatment unit 10, as shown in Fig. 1, is adapted to be connected to a water softener 12, media filtration systems or bypass valves 14, all used in the treatment of water. Water softeners, of the kind illustrated, typically include a control valve 16 that is connected to a resin vessel 18, which contains regenerative resin beads.

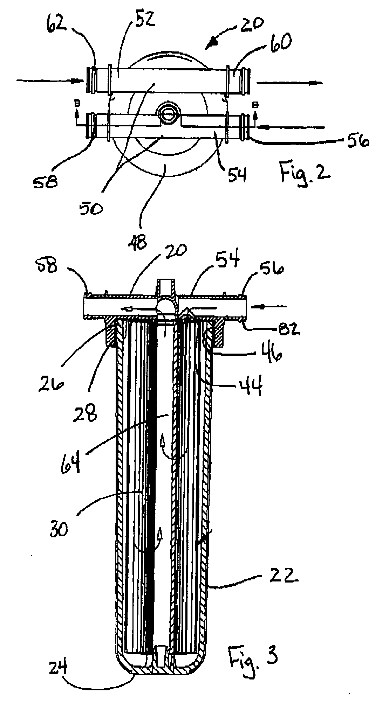

The modular water treatment units 10 include a head 20 that is threadably engaged to a sump 22, as shown in Figs. 2 and 3. The sump, 22, is a cylindrical member that includes an enclosed bottom portion 24 and an open top 26. The top 26 of the sump 22 includes a plurality of threads 28 surrounding the perimeter. The sump 20 is designed to house either a filter medium 30, as shown in Fig, 3, such as carbon filters, carbon block filters, sediment filters, membrane filters or absorption filters, or an irradiation system, as shown in Fig, 5, such as UV sterilization systems that are used to remove contaminants from the water. While a sump 22 is shown in the illustrative embodiments, it is contemplated that a water treatment component, such as a filter or irradiation system can be connected to the treatment head 20 remotely by use of an adapter and hoses connected to the treatment head 20.

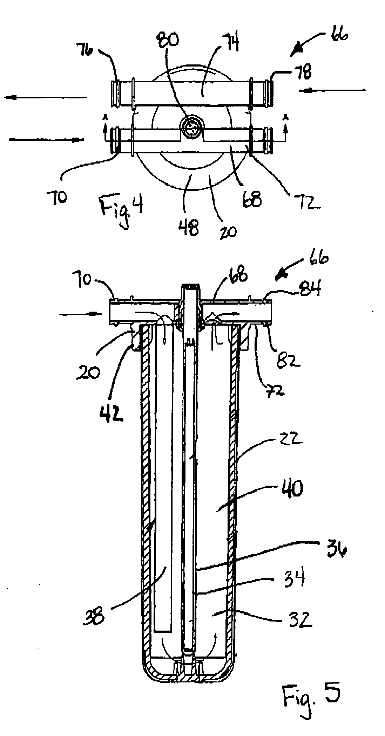

The UV system 32, as shown in Figure 5, utilizes a light source 34 positioned within a transparent sleeve 36 that allows the UV light to treat the water entering the sump 22 through the inlet tube 38. A light reflecting layer 40 is positioned within the sump 22 in order to maximize the effect of the UV light source 34. The filter medium utilizes carbon or other means to filter contaminants from the water.

The head 20 of the modular water treatment unit 10 includes a circular base 42. The circular base 42 includes a recess 44 that contains a plurality of threads 46 adapted to engage the threads 28 of the sump 22. The head 20 also includes a top surface 48 having a pair of parallel oriented flow tubes or lines which includes a bypass tube 52 and a treatment tube 54. The bypass tube 52 is adapted to allow water flowing to or from the water softener 12 or conduit to bypass the filter or treatment process. The bypass tube 52 includes a first end 60 and a second end 62 opposite the first end 606. The first and second ends 60, 62 of the bypass tube 52 include an annular recess with an o-ring that are designed to be used with quick connect clips 86 to permit attachment of the water treatment unit 10 to other modular water treatment units 10, water softeners 12, water lines or bypass valves, without the need to thread, solder, glue or weld the bypass tube 52 to other system components.

The treatment tube 54 of the treatment head 20 is adapted to direct untreated water through the filter or irradiation sump 22 of the modular water treatment unit 10. The treatment tube 54 is oriented substantially parallel to the bypass tube 52 and includes a first end 56 and a second end 58 spaced apart from the first end 56. Untreated water enters the first end 56 of the water treatment tube 54 and is directed through a passageway 55 downward through the filter medium 30 within the sump 22. Water filtered by the filter medium 30 is directed upward through a central passageway 64 and through a second passageway 57 to the second end 58 of the treatment tube 54. Depending upon the orientation of the head 20 with respect to the water softener 12, the treated water may flow towards or away from the control valve 16. The bypass tube 52 is parallel to the treatment tube 54 and is adapted to permit water to bypass the filtering process.

Figures 4 and 5 illustrate the irradiation modular water treatment unit 66. The irradiation modular treatment unit 66 includes a head 20 and a sump 22 that are similar to the design of the filter modular water treatment unit 10 shown in Figures 2 and 3. The top surface 48 of the head 20 includes a bypass tube 74 having a first end 76 and a spaced apart second end, 78. The treatment tube 68 directs the flow of untreated water from the inlet 70 into the sump 22 through inlet tube 38. The center portion of the sump 22 includes a water proof transparent sleeve 36 that houses the UV light source 34. Untreated water entering the inlet tube 38 is directed past the UV light source 34 to treat the water. The treated water is then directed upward through the second end 72 of the treatment tube 68.

Depending upon the orientation of the head 20 of the irradiation modular treatment unit 66, water flowing through conduits can be treated before the water enters the water softener control valve 16 or after the water exits the softener control valve 16. The head 20 of the irradiation modular treatment unit 66 includes an electrical connector 80, as shown in Fig. 4, which permits the UV light source 34 to be connected to a power source. The head 20 of the modular treatment units 10, 66 is of a unitary design with the treatment and bypass tubes formed with the head 20. The head 20 of the treatment unit 10 can be formed from a variety of materials including polymers and various metals and alloys.

The ends of the treatment tubes 54, 68 and bypass tubes 52, 74, as shown in Figs. 3 and 5, include a groove 82 and a lip 84 that are adapted to accept quick connect couplings 86, as shown in Figures 1 and 6. The quick connect couplings 86 are retained to the ends of the bypass tubes by use of quick connect clips 88 and sealed by use of o-rings (not shown). The clips 88 can be u-shaped members that fit into openings 90 formed in the quick connect couplings 86. Other forms of quick connect clips can be used. The control valve 16 of the water softener 12 also permits the use of quick connect couplings to permit installation of the modular treatment unit 10 without the need for threading, soldering, gluing or welding together of the system components. In the event a system component needs to be replaced, the coupling 86 can be removed by pulling the clips 88 from coupling 86.

Figure 6 illustrates two modular water treatment units 10 connected in series, wherein the left most water treatment unit 10 is oriented so that the treatment tube 54 is treating water entering the control valve 16, and the right most water treatment unit 10 is oriented so that the treatment tube 54 is oriented to treat water exiting the control unit 16. Designing a system to treat the water entering or exiting the control valve 16 is accomplished by rotating the modular water treatment units 10 one hundred eighty degrees to re-orient the treatment tubes 54 in the desired direction. If it is desirable to use two modular water treatment units 10 to filter water entering the control unit 16, the right treatment unit 10 of Fig. 6 is rotated 180 degrees so that the treatment tube 54 of the right water treatment unit 10 is coaxial with the treatment tube 54 of the left water treatment unit 10 of Figure 6. Bypass valve 14 is used to bypass the modular water treatment units and water softener 12 completely.

In use, the installer determines whether water entering or exiting the water softener 12 requires treatment. If the incoming water supply needs to be treated, the installer orients the treatment tube 54 of the water treatment unit 10 so that the tube 54 is aligned with the water inlet of the control unit 16 of the softener 12. Once the water treatment unit 10 is properly aligned with the control unit 16 of the water softener 10, the quick connect clips 88 are installed in the quick connect couplings 86 to secure the treatment and bypass tubes 52, 54 to the inlet and outlet of the control unit 16. Removal and/or reversal of the water treatment unit 10 can be accomplished by removing the clip 88 and either removing or reversing the direction of the water treatment unit 10.

Various features of the invention have been particularly shown and described in connection with the illustrated embodiment of the invention, however, it must be understood that these particular arrangements merely illustrate, and that the invention is to be given its fullest interpretation.

## Claims

**1.** A modular fluid treatment unit adapted to permit selective fluid treatment of first and second fluid lines, the modular fluid treatment unit comprising:
a treatment head having a top portion and a base portion;
a treatment sump coupled to the base portion of the treatment head, the treatment sump adapted to contain a fluid treatment component;
a bypass line having a first end and a second end interconnected by a passageway, the bypass line adapted to be connectable to either the first or the second fluid lines;
a treatment line having first and second ends adapted to be connectable to either the first or the second fluid lines, the treatment line including a first passageway in fluid communication with the treatment sump and the first end of the treatment line, and a second passageway extending from the treatment sump to the second end of the treatment line such that fluid entering the first end of the treatment line flows through the treatment sump before exiting the second end of the treatment line.

**2.** The modular fluid treatment unit according to claim 1, wherein the ends of the bypass tube are adjacent to the ends of the treatment tube.

**3.** The modular fluid treatment unit according to claim 1 or 2, wherein the ends of the bypass tube and the treatment tube each include an annular groove adapted to accept an o-ring.

**4.** The modular fluid treatment unit according to one or more of the preceding claims, wherein the base portion of the treatment head includes an annular recess having a plurality of threads adapted to receive corresponding threads on the treatment sump.

**5.** The modular fluid treatment unit of claim 1, wherein the fluid treatment component is in the form of a filter.

**6.** The modular fluid treatment unit according to one or more of the preceding claims, wherein the fluid treatment component is in the form of an ultraviolet irradiation unit.

**7.** The modular fluid treatment unit according to one or more of the preceding claims, wherein the treatment head can be uncoupled from the first and second fluid lines, rotated and re-coupled to the first and second fluid lines to alternate the lines being treated.

**8.** The modular fluid treatment unit according to one or more of the preceding claims, wherein the bypass line is substantially parallel to the treatment line.

**9.** The modular fluid treatment unit according to one or more of the preceding claims, wherein multiple modular fluid treatment units can be interconnected to provide for a series of fluid treatments.

**10.** A modular fluid treatment unit for treating a fluid carried by conduits, the modular fluid treatment unit comprising:
a treatment head having a pair of inlets adapted to be coupled to a first pair of conduits and a pair of outlets adapted to be coupled to a second pair of conduits;
a treatment sump adapted to house a treatment component, the treatment sump adapted to be coupled to the treatment head;
wherein fluid entering the first of the inlets bypasses the treatment sump when traveling to the first of the outlets and fluid entering the second of the inlets enters the treatment sump before exiting the second of the outlets; and
wherein the inlets and outlets of the treatment head can be uncoupled from the conduits to permit rotation of the treatment head so that the inlets can be coupled to the second pair of conduits and the outlets can be coupled to the first pair of conduits.

**11.** The modular fluid treatment unit according to claim 10, wherein the inlets are positioned adjacent one another.

**12.** The modular fluid treatment unit according to claim 10 or 11, wherein the outlets are positioned adjacent one another.

**13.** The modular fluid treatment unit of claim 10, wherein the inlets and outlets each include an annular groove adapted to accept an o-ring.

**14.** The modular fluid treatment unit according to one or more of claims 10 to 13, wherein the treatment head includes an annular recess having a plurality of threads adapted to receive corresponding threads on the treatment sump.

**15.** The modular fluid treatment unit according to one or more of claims 10 to 14, wherein the treatment component is in the form of a filter.

**16.** The modular fluid treatment unit according to one or more of claims 10 to 14, wherein the treatment component is in the form of an ultraviolet irradiation unit.

**17.** The modular fluid treatment unit according to one or more of claims 10 to 16, wherein the inlets and outlets of multiple modular treatment units can be interconnected to provide a series of fluid treatments.

**18.** A fluid treatment head to permit selective fluid treatment of fluid within first and second conduits, the fluid treatment head comprising:
a bypass line having first and second ends, the bypass line adapted to be connected into the first fluid conduit;
a treatment line having first end positioned adjacent the first end of the bypass line and a second end positioned adjacent the second end of the bypass line, the treatment line adapted to be connected into the second fluid conduit, wherein fluid entering the treatment line from the second fluid conduit is diverted to a fluid treatment component before exiting the treatment line; and
wherein the ends of the bypass line can be uncoupled from the first fluid conduit and the ends of the treatment line can be uncoupled from the second fluid conduit to permit rotation of the treatment head so that the ends of the bypass line can be coupled to the second fluid conduit and the ends of the treatment line can be coupled to the first fluid conduit.

**19.** The fluid treatment head according to claim 18, wherein the ends of the bypass line each include an annular groove adapted to accept an o-ring.

**20.** The fluid treatment head according to claim 18 or 19, wherein the ends of the treatment line each include an annular groove adapted to accept an o-ring.

**20.** The fluid treatment head according to one or more of claims 18 to 20, further including a treatment sump coupled to the treatment head.

**21.** The fluid treatment head according to claim 20, wherein the treatment head includes an annular recess having a plurality of threads adapted to receive corresponding threads on the treatment sump.

**22.** The fluid treatment head according to one or more of claims 18 to 21, wherein the fluid treatment component is in the form of a filter.

**23.** The fluid treatment head according to one or more of claims 18 to 21, wherein the fluid treatment component is in the form of an ultraviolet irradiation unit.

**24.** The fluid treatment head according to one or more of claims 18 to 23, wherein the fluid treatment component is remotely located from the fluid treatment head.

**25.** A fluid treatment system including a plurality of modular fluid treatment units according to one or more of claims 1 to 17, arranged for a series of fluid treatments.

**26.** A fluid treatment system according to claim 25, further including a water softener.
